# EUROPEAN PATENT APPLICATION

(11) **EP 0 748 017 A2**
(43) Date of publication of application: **11.12.1996**
(21) Application number: 96201554.1
(22) Date of filing: 04.06.1996
(51) Int. Cl.: H02B 1/40

(54) **Container for electrical equipment with compartments**

(30) Priority: 08.06.1995 IT MI950414 U
(71) Applicant: SIFE INDUSTRIALE S.p.A., I-Milano (IT)
(72) Inventor: Balzanelli, Vincenzo, Milano (IT)
(74) Representative: Raimondi, Alfredo, Dott. Ing. Prof.

(57) **Abstract**

Container in the form of a cabinet or the like for electrical equipment, consisting of several compartments and a front door, characterized in that each compartment is assembled by means of continuous force-fitting joints (10) which can be operated axially and in that each compartment is rotatable relative to the adjacent compartment, both front and rear, by means of a hinge-type joint element (200).

## Description

The present invention relates to a container in the form of a cabinet or the like for electrical equipment, consisting of several compartments which can be assembled by means of force-fitting joints and which are rotatable relative to one another by means of hinge elements of the said joint.

As is known, a lot of electrical equipment such as electric consoles for distributing and/or controlling electrical energy is normally installed inside metal containers in the form of cabinets to be placed on the ground, wall-mounted or inset, provided with a door which can be opened and one or more internal compartments. At present many types of cabinets for these purposes are made with a fixed structure which is predetermined during production, while many others are formed by assembling various components such as side walls, top and bottom end faces, removable shelves and the like, depending on requirements.

In the particular case of containers with modular and pre-formed walls, assembly of the said elements is performed by means of various fixing systems such as pins or screws; these fixing systems require the boring of holes in predetermined positions on the elements, resulting in the undesirable weakening of the component parts, in addition to requiring long assembly times and a high degree of precision during production.

These embodiments in practice have a certain structural complexity and present difficulties as regards tightening of the screws which are located inside the cavities of the sides of the frames, in positions which are difficult for the assembler to reach; furthermore it is impossible to gain access to the rear part of the equipment arranged inside the container, except by disassembling at least part of the latter.

The technical problem which is therefore posed is that of providing a cabinet for containing electrical equipment, which is easily assemblable and disassemblable, modular so that its volume can be increased even after installation, and consisting of interchangeable parts in order to reduce the number of production moulds and consequently the number of parts to be kept in store, and which allows easy access to the installed electrical equipment from the front and rear side.

Another aim of the invention is that of providing a container which has hinge means designed to effect a coupling between two elements, defining compartments of the container itself, which are able to rotate relative to one another about a fixed axis so as to form for example doors and/or cabinets which can be opened in the region of any of the compartments, so as to allow access to the equipment both from the front side and from the rear side thereof.

These and other further aims which can be understood more clearly from the description which follows, are achieved by a container in the form of a cabinet or the like for electrical equipment, consisting of several compartments and a front door, characterized in that each compartment is assembled by means of continuous force-fitting joints which can be operated axially and in that each compartment is rotatable relative to the adjacent compartment, both front and rear, by means of a hinge-type joint element.

Further characteristic features of the present invention may be obtained from the following detailed description, with reference to the accompanying drawings, in which:
Figure 1 shows a perspective view of the container according to the invention;
Figure 2 shows an exploded view of an example of embodiment of the joint connecting the walls forming the compartments of the container;
Figure 2a shows a schematic cross-section of the joint according to Figure 2 in the assembled condition;
Figure 3 shows an exploded view of an embodiment of the hinge joint for rotating connection of the compartments of the container;
Figures 3a shows a schematic cross-section of the hinge joint according to Figure 3 in the assembled condition;
Figure 4 shows a perspective view of the container with the compartments rotated in the open position with repsect to one another.

With reference to the aforementioned figures, the container according to the invention is composed essentially of vertical sides or walls and top and bottom end faces which are joined together by means of continuous joint elements 10 and/or hinge-type joining elements 200.

More particularly, said joint 10 consists of a quadrangular profiled member 1 which is internally hollow and extends along a length corresponding to the width of the walls of the container; a pair of flat and parallel flanges 2 emerges from each of two adjacent and mutually perpendicular faces 1a, 1b of the profiled member 1, said flanges being intended to form means for force-fitting engagement into a continuous quandrangular cavity 3a formed on the end edges of panels 3 having a box-shaped body and forming the sides and the end faces of the container.

The surfaces 1a, 1b of the box-shaped body 1, corresponding to the pairs of parallel flanges 2, have formed in them rectangular longitudinally extending eyelets or openings 5, into which tongues 6 emerging from the said cavity 3 of the panels and lying on a plane parallel to that of the panel itself can be inserted.

Said tongues 6 have a flat design with the external free end such that it defines a flat head 6a substantially in the form of a cam with a recessed seat 6b formed on the side of the tongue itself.

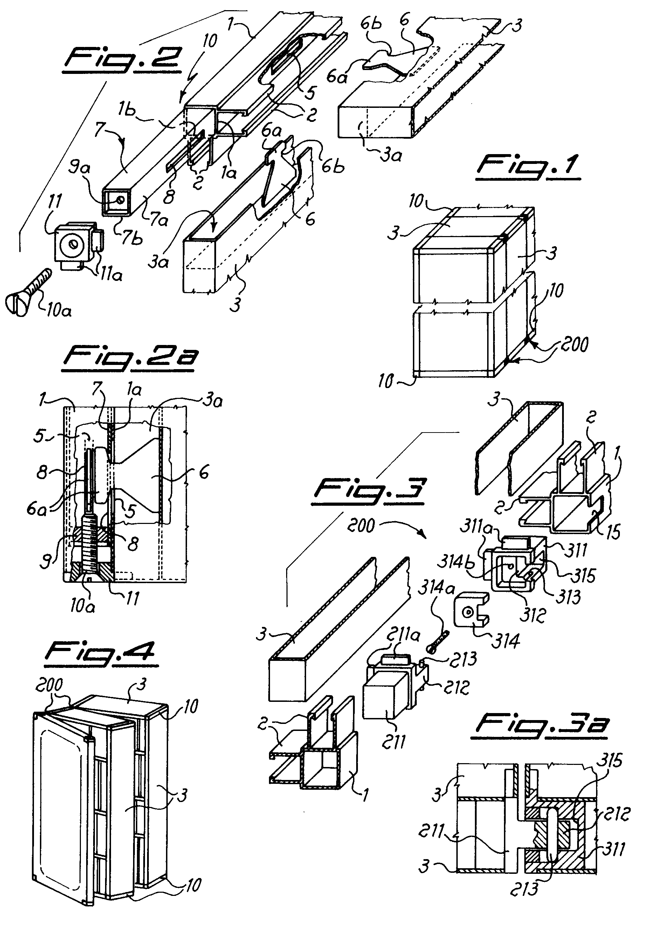

The box-shaped body 1 receives inside it, with a small amount of play, a sliding member 7 consisting of a quadrangular box-shaped body with a length substantially equal to that of the external body 1 and provided in its longitudinal surfaces 7a, 7b, corresponding to the faces 1a, 1b of the body 1, with eyelets 8 which are elongated in the longitudinal direction and have a substantially rectangular shape (Figures 1 and 3) and a length substantially equal to that of the openings 5 of the box-shaped body 1. Said eyelets 8 are formed in a position such as to be located opposite the eyelets 5 of the body 1 when the sliding member 7 is concealingly inserted inside the box-shaped body 1, as illustrated in Figure 2.

Each front end of the sliding member 7 has associated with it a block 9 having a threaded hole 9a in the centre and forming a female thread for engagement with a longitudinal tightening screw 10a passing through a reaction block 11 which can be mounted on the end of the box-shaped body 1 (Figures 2 and 2a) and is provided with flat extensions 11a parallel to the flanges 2 of the body 1, against which they come into abutment.

Assembly of the walls and/or end faces 3 is obtained by arranging the continuous joint 10 so that the longitudinal openings 8 of the internal sliding member 7 are arranged opposite the associated longitudinal openings 5 of the profiled member 1. In this way, by inserting the cavity 3a of the panels 3 onto the guiding flanges 2 of the surfaces 1a, 1b of the profiled member 1 until it overlaps the extensions 11a, the head 6a of the tongues 6 is able to insert itself into the aligned eyelets 5, 8 passing through both the profiled member 1 and the sliding member 7.

At this point (Fig. 2a), tightening of the screw 10 on the female thread 9a causes sliding of the sliding member 7 with respect to the profiled member 1 until the opposite end of the opening 8 engages in the lateral seat 6b of the head 6a, causing locking and simultaneous alignment of the panel 3 with the continuous joint.

From Figures 3 and 3a it can be seen how the container according to the invention may be opened in the region of each compartment by means of a hinge element 200 which allows hinging of two joint sections 10 relative to one another for the formation of doors and the like.

More particularly, said hinge element 200 comprises a first front-end block 211 similar to the block 11 and provided with flat extensions 211a parallel to the flanges 2 of the body 1; said block 211 has an arm 212, extending in the axial direction, on which the hinging pin 213 is provided, being arranged in the transverse direction with respect to the axial direction of the joint.

Said pin 213 and arm 212 are designed for coupling with corresponding seats 312 and 313 of a second block 311 forming the other arm of the hinge, inside which they are locked by means of application of a front closing element 314 axially held in position by means of a screw 314a engaged in a corresponding female thread 314b of the block 314 and retained on it by means of a Seger ring 314c which prevents it from falling during unscrewing.

Both the block 314 and the section of the body 1 inside which it is inserted have formed in them openings 315 and 15, respectively, which, when the hinge is assembled, are located in a corresponding position and allow rotation of the arm 212 about the pin 213 retained in its fixed seat 313 in the block 311.

It is therefore obvious how the container according to the invention may be opened in the region of each compartment containing the electrical equipment and/or associated wiring, thus allowing easy access both to the front part of the equipment for operation thereof by the user, and to the rear part thereof for facilitating initial wiring-up and any modifications to the circuitry and/or maintenance operations by the specialist engineer once the cabinet has been installed.

In practice, the invention as described in a few embodiments thereof may be subject to modifications and variations as regards the structure of the side walls and end faces, the form of the cam heads and the dimensions of the various components, without departing from the protective scope of the invention itself, as described and claimed below.

## Claims

1. Container in the form of a cabinet or the like for electrical equipment, consisting of several compartments and a front door, characterized in that each compartment is assembled by means of continuous force-fitting joints (10) which can be operated axially and in that each compartment is rotatable relative to the adjacent compartment, both front and rear, by means of a hinge-type joint element (200).

2. Container according to Claim 1, characterized in that said continuous connecting joint comprises an internally hollow profiled member (1), at least two adjacent surfaces (1a, 1b) of which have a pair of parallel flanges (2) extending perpendicularly with respect to the faces of the profiled member and along the entire length thereof, and in that said profiled member is designed to contain inside it a coaxial sliding member (7), sliding in a longitudinal direction with respect to the profiled member (1), at least one longitudinal eyelet (5, 8) being formed respectively on the surfaces (1a, 1b) of the hollow profiled member (1) provided with said pairs of flanges (2) and on the corresponding surfaces of the sliding member (7), said sliding member (7) having an end female thread (9a) designed to cooperate with an operating screw (10a) for moving said sliding member (7) from a position where the eyelets (8) thereof and the eyelets (5) of the profiled member (1) are aligned, into a non-aligned position where the end surface of the eyelet (8) of the sliding member (7) engages with a corresponding seat (6b) of a cam element (6) projecting from the end (3a) of each panel (3) to be secured to the joint and inserted inside the joint itself.

3. Container according to Claim 1, characterized in that said screw (10a) reacts on a reaction element (11) arranged between the head of the screw itself and the female thread (9a) integral with the sliding member (7).

4. Container according to Claim 1, characterized in that said rectangular eyelets (5, 8) present on the walls of the profiled member (1) and on the sliding member (7) are three in number, so as to receive and cooperate with the same number of cam heads (6a) emerging from the respective end edges of the panels (3) to be secured.

5. Container according to Claim 1, characterized in that said hinge element (200) comprises a first front-end block (211) which has an arm (212) extending in the axial direction and provided with the hinging pin (213) arranged transversely with respect to the axial direction of the joint.

6. Container according to Claims 1 and 5, characterized in that said hinge element (200) comprises a second block (311) forming the other hinge arm, which has formed inside it seats (312, 313) for housing said pin (213) and arm (212), axially locking means (314a, 314b) also being provided.

7. Container according to Claims 1 and 5, characterized in that openings (315, 15) aligned with one another and designed to allow rotation of the arm (212) about the pin (213) are formed on the corresponding external surfaces of said second block (311) and the section of the body (1) in which the latter is inserted.
